# FASCICULE DE BREVET EUROPEEN

(11) **EP 2 705 644 B1**
(45) Date de publication et mention de la délivrance du brevet: **05.07.2017**
(21) Numéro de dépôt: 12725112.2
(22) Date de dépôt: 07.05.2012
(51) Int. Cl.: H04L 29/06, G06F 21/55, G06F 21/57, G06F 9/45

(54) **PROCEDE ET DISPOSITIF DE DETECTION D'INTRUSIONS SUR UN ENSEMBLE DE RESSOURCES VIRTUELLES**
VERFAHREN UND VORRICHTUNG ZUR ERKENNUNG VON EINDRINGUNGEN BEI EINER REIHE VIRTUELLER RESSOURCEN
METHOD AND APPARATUS FOR DETECTING INTRUSIONS ON A SET OF VIRTUAL RESOURCES

(30) Priorité: 06.05.2011 FR 1153914
(43) Date de publication de la demande: 12.03.2014
(73) Titulaire: Orange, 75015 Paris (FR)
(72) Inventeur: LANIEPCE, Sylvie, F-14000 Caen (FR); BIGNON, Fabien, F-14000 Caen (FR); MITTIG, Karel, F-14000 Caen (FR)
(86) Numéro de dépôt international: PCT/FR2012/051009
(87) Numéro de publication internationale: WO 2012/153054

(56) Documents cités:
- US-A1- 2008 201 780
- AMIR VAHID DASTJERDI ET AL: "Distributed Intrusion Detection in Clouds Using Mobile Agents", ADVANCED ENGINEERING COMPUTING AND APPLICATIONS IN SCIENCES, 2009. ADVCOMP '09. THIRD INTERNATIONAL CONFERENCE ON, IEEE, PISCATAWAY, NJ, USA, 11 octobre 2009 (2009-10-11), pages 175-180, XP031584634, ISBN: 978-1-4244-5082-4
- SEBASTIAN ROS ET AL: "Intrusion Detection in the Cloud", 2009 EIGHTH IEEE INTERNATIONAL CONFERENCE ON DEPENDABLE, AUTONOMIC AND SECURE COMPUTING, 1 décembre 2009 (2009-12-01), pages 729-734, XP055011860, DOI: 10.1109/DASC.2009.94 ISBN: 978-0-76-953929-4
- GANAME A K ET AL: "Defining a simple metric for real-time security level evaluation of multi-sites networks", PARALLEL AND DISTRIBUTED PROCESSING, 2008. IPDPS 2008. IEEE INTERNATIONAL SYMPOSIUM ON, IEEE, PISCATAWAY, NJ, USA, 14 avril 2008 (2008-04-14), pages 1-8, XP031268534, ISBN: 978-1-4244-1693-6
- HAO CHEN ET AL: "Optimising IDS Sensor Placement", AVAILABILITY, RELIABILITY, AND SECURITY, 2010. ARES '10 INTERNATIONAL CONFERENCE ON, IEEE, PISCATAWAY, NJ, USA, 15 février 2010 (2010-02-15), pages 315-320, XP031652926, ISBN: 978-1-4244-5879-0

## Description

La présente invention concerne un procédé de détection d'intrusions dans un environnement dit d'« informatique dans le nuage », le terme habituellement utilisé étant « cloud computing ».

Elle trouve une application particulièrement intéressante dans la sécurisation des systèmes informatiques dont l'architecture est basée sur des ressources informatiques dématérialisées, mises à disposition d'un grand nombre d'utilisateurs qui y accèdent à distance et de manière évolutive dans le temps, c'est-à-dire à la demande. Une telle architecture est plus connue sous le nom de cloud computing.

Le concept de cloud computing, ou d'informatique dans le nuage, est apparu récemment pour désigner des architectures informatiques dans lesquelles des traitements informatiques traditionnellement localisés sur des postes clients d'utilisateurs d'une entreprise, ou sur des serveurs de l'entreprise sont déportés sur des serveurs distants. Des ressources matérielles distantes, réparties à travers le monde, sont ainsi accédées à la demande via internet pour créer des services accessibles en ligne par les utilisateurs. Les applications et les données ne se trouvent plus sur l'ordinateur local de l'utilisateur, ou sur le serveur situé dans l'entreprise de cet utilisateur, mais dans un nuage composé d'un certain nombre de serveurs distants interconnectés. Avec le cloud computing, une entreprise n'a donc plus besoin de monter elle-même son infrastructure réseau physique. Au contraire, elle peut faire appel à un fournisseur de services qui propose de telles capacités clés en main.

Avec le cloud computing, un aspect tel que la sécurité est également déporté vers le fournisseur de services qui propose d'opérer l'architecture physique en lieu et place de l'entreprise.

En ce qui concerne la sécurité d'une architecture informatique, diverses techniques de protection existent parmi lesquelles on trouve les techniques de détection d'intrusions, ou « IDS » (pour « Intrusion Detection System »). Un système de détection d'intrusions est un mécanisme destiné à repérer des activités anormales ou suspectes sur une cible, typiquement sur un réseau d'entreprise. Il permet ainsi d'avoir une connaissance sur des tentatives réussies ou échouées d'intrusions. Différents types de systèmes de détection d'intrusions existent, parmi lesquels les IDS réseau, ou « NIDS » (pour « Network Intrusion Detection System »). Le principe des NIDS est d'opérer une protection en périmètre d'un réseau constituant le système observé. Un trafic en bordure de ce réseau est alors capturé en un ou plusieurs points d'interconnexion du réseau observé avec un deuxième réseau, par exemple le réseau internet, puis analysé par comparaison avec un ensemble de signatures d'attaques connues et stockées dans des librairies. Une alerte est alors levée lorsqu'une signature d'attaque est identifiée dans le trafic capturé. L'architecture d'un IDS inclut en général une pluralité de points de surveillance appelés sondes, qui remontent des alertes identifiées dans le trafic observé vers un centre de gestion qui analyse le trafic collecté par les sondes et corrèlent les événements de sécurité afin d'affiner la détection.

Cependant, mettre en place un tel système de détection d'intrusions dans une architecture en cloud computing peut s'avérer complexe, voire impossible. En effet, une architecture en cloud computing, composée d'une pluralité de machines physiques interconnectées, est destinée à offrir une pluralité de réseaux à des utilisateurs, ces réseaux étant construits à partir de machines virtuelles hébergées par les machines physiques du cloud, les machines virtuelles étant créées et libérées en fonction des besoins des utilisateurs. Déployer un système de détection d'intrusions classique dans une telle architecture nécessiterait donc de déployer de manière statique et dédiée dans chacun de ces réseaux un ensemble de sondes aptes à remonter des alertes à un centre de gestion des alertes. Or, positionner des sondes de manière statique dans des réseaux où les ressources sont créées et libérées à la demande pose de fait un problème. Par ailleurs, la volumétrie des informations remontées par ces sondes, tous réseaux confondus, serait telle que les informations remontées seraient difficilement exploitables.

Le document "Distributed Intrusion Detection in Clouds Using Mobile Agents" décrit un système de détection d'intrusions dans une architecture en cloud computing.

L'invention est définie dans les revendications indépendantes, 1, 8, 10 et 11.

L'invention résout ce problème en proposant un procédé de détection d'intrusions sur un ensemble de ressources virtuelles dans un système informatique comprenant au moins une machine physique hébergeant ledit ensemble de ressources virtuelles, caractérisé en ce qu'il comporte les étapes de :
- calcul d'un itinéraire de détection d'intrusions défini par une suite de ressources virtuelles dudit ensemble, intégrées et ordonnées dans la suite en fonction de niveaux respectifs de criticité de vulnérabilité affectés aux ressources virtuelles dudit ensemble,
- exécution d'une opération de détection d'intrusions en suivant l'itinéraire calculé.

Le procédé selon l'invention permet de mettre en oeuvre une détection d'intrusions sur une architecture en cloud computing alors que les méthodes de détection classiques sont inadaptées à une telle architecture.

Avec le procédé de l'invention, il est effectué un contrôle séquentiel de tout ou partie des ressources informatiques du réseau à surveiller. Par rapport à un contrôle classique continu et en parallèle de toutes les ressources informatiques à surveiller, cela offre une possibilité de passage à l'échelle des systèmes de détection classiques. Ainsi, comparativement à une approche habituelle où les organes de surveillance du système de détection d'intrusions, positionnés statiquement, surveillent les ressources informatiques et génèrent en continu des informations de sécurité relatives à ces ressources, le contrôle s'effectue sur un échantillonnage temporel de ressources. Ainsi, le volume de données à traiter à un instant donné provient de la seule ressource virtuelle informatique en cours d'investigation. Il est donc tout à fait possible de traiter ce volume de données, alors que l'architecture en cloud est par définition beaucoup plus étendue qu'une architecture de réseau classique. Cette approche rend donc ainsi possible une détection d'intrusions dans une architecture en cloud computing qui, par définition met à disposition d'utilisateurs une pluralité de réseaux. Par ailleurs, le positionnement de sondes de détections d'intrusions, qui dans un système classique de détection d'intrusions est statique, est ici continuellement adapté aux ressources virtuelles en présence.

Avantageusement, lorsque la suite qui définit l'itinéraire comprend deux ressources de niveaux respectifs de criticité de vulnérabilité n1 et n2, avec n1 > n2, la ressource de niveau de criticité n1 apparaît dans l'itinéraire un nombre de fois supérieur à celui de la ressource de niveau n2.

L'itinéraire de visite du point de contrôle de détection en charge d'opérer une détection d'intrusions auprès de chaque ressource de l'itinéraire tient compte du niveau de criticité de vulnérabilité associé à chacune des ressources virtuelles. Ainsi, une ressource virtuelle dont le niveau de criticité de la vulnérabilité est très élevé est surveillé plus fréquemment qu'une ressource dont le niveau de criticité est moins élevé. En effet, le calcul de l'itinéraire tient compte des niveaux de criticité et ainsi, une ressource peut être surveillée plus souvent que d'autres et apparaître plusieurs fois dans l'itinéraire.

Selon un mode de réalisation, lorsque lequel ledit ensemble de ressources virtuelles est hébergé par une pluralité de machines physiques et lorsque l'itinéraire prévoit le passage d'une première machine physique à une deuxième machine physique, il est prévu :
- une libération d'un point de contrôle de détection d'intrusions hébergé par la première machine physique,
- une activation d'un point de contrôle de détection d'intrusions sous la forme d'une machine virtuelle hébergée par la deuxième machine physique.

Le centre de contrôle de détection d'intrusions gère le point de contrôle de détection et pour une ressource virtuelle de l'itinéraire qui doit faire l'objet d'une surveillance commande l'activation du point de contrôle en tant que machine virtuelle sur la machine physique qui héberge la ressource virtuelle. Le point de contrôle de détection met ensuite en oeuvre une détection d'intrusions sur la ressource virtuelle, puis le centre de contrôle de détection d'intrusions libère le point de contrôle de détection avant de passer à une ressource virtuelle suivante de l'itinéraire.

Avantageusement, lorsque l'itinéraire prévoit le passage d'une première machine virtuelle à une deuxième machine virtuelle, la première et deuxième machines virtuelles étant hébergées par la même machine physique, il est prévu d'utiliser un même point de contrôle de détection d'intrusions sur les deux machines virtuelles.

Dans un exemple de réalisation, il est procédé à une optimisation de l'itinéraire lors de la détection d'intrusions. Ainsi, si une première ressource de l'itinéraire est sur une première machine physique, si une ressource virtuelle suivante de niveau de criticité identique est sur une deuxième machine physique et si une troisième ressource virtuelle de niveau de criticité identique est sur la première machine physique, alors le centre de contrôle de détection d'intrusions modifie l'ordre des ressources virtuelles de l'itinéraire de manière à ce que le point de contrôle de détection d'intrusions mette en oeuvre une détection d'intrusions sur les ressources virtuelles de la première machine physique, en l'espèce les première et troisième ressources virtuelles, puis sur la ressource virtuelle hébergée par la deuxième machine physique. Ainsi, à niveau de criticité égal, le centre de détection optimise l'utilisation du point de contrôle de détection d'intrusions et évite ainsi une activation et une libération du point de contrôle de détection.

Selon l'invention, le procédé comprend une étape préalable de réception par un dispositif de contrôle de détection d'intrusions en provenance d'un outil d'évaluation de vulnérabilités d'un indicateur de vulnérabilité associé à la ressource virtuelle.

De façon avantageuse, l'étape d'évaluation du niveau de criticité d'une première ressource virtuelle est réalisée par agrégation de l'indicateur de vulnérabilité reçu pour la première ressource avec au moins un indicateur de vulnérabilité d'une deuxième ressource virtuelle, la deuxième ressource virtuelle étant en relation avec la première ressource virtuelle.

Pour calculer l'itinéraire, le centre de contrôle de détection d'intrusions utilise, entre autres, des données de sécurité propres aux ressources virtuelles qui renseignent le centre de contrôle de détection d'intrusions sur la vulnérabilité potentielle associée aux ressources virtuelles actives présentes sur chaque machine physique de l'architecture. Ces données, sont agrégées avec d'autres données de manière à produire un niveau de criticité d'une ressource pour calculer l'itinéraire des ressources virtuelles à surveiller.

Dans un mode de réalisation, l'indicateur de vulnérabilité associé à une machine virtuelle est reçu selon une fréquence prédéfinie.

Avantageusement, la ressource virtuelle de l'itinéraire dont le niveau de criticité associé est le plus élevé apparaît dans l'itinéraire un nombre de fois inférieur à une valeur prédéterminée.

Le nombre de fois où une ressource virtuelle apparaît dans l'itinéraire est limité, de manière à ce qu'une ressource virtuelle de niveau de criticité associé très élevé ne monopolise pas le point de contrôle de détection. Ainsi, le procédé garantit que toutes les ressources virtuelles de l'environnement sont surveillées.

L'invention concerne également un dispositif de contrôle de détection d'intrusions d'un ensemble de ressources virtuelles dans un système informatique comprenant au moins une machine physique hébergeant ledit ensemble de ressources virtuelles, comprenant :
- des moyens de calcul d'un itinéraire, agencés pour calculer un itinéraire de détection d'intrusions défini par une suite de ressources virtuelles à surveiller à partir des ressources virtuelles dudit ensemble, ajoutées et ordonnées dans la suite en fonction de niveaux respectifs de criticité de vulnérabilité affectés aux ressources virtuelles dudit ensemble,
- des moyens d'exécution, agencés pour exécuter une opération de détection d'intrusions en suivant l'itinéraire calculé..

L'invention concerne aussi un système de détection d'intrusions sur un ensemble de ressources virtuelles dans un système informatique comprenant au moins une machine physique hébergeant ledit ensemble de ressources virtuelles, comprenant :
- un dispositif de contrôle de détection d'intrusions selon l'invention,
- un point de contrôle de détection d'intrusions, adapté pour mettre en oeuvre une opération de détection d'intrusions sur une ressource virtuelle, à la demande du dispositif de contrôle de détection d'intrusions.

L'invention porte également sur un programme sur un support de données et chargeable dans la mémoire d'un ordinateur, le programme comprenant des portions de code pour l'exécution des étapes du procédé selon l'invention, lorsque le programme est exécuté sur ledit ordinateur.

L'invention concerne aussi un support de données sur lequel est enregistré le programme d'ordinateur selon l'invention.

D'autres caractéristiques et avantages de la présente invention seront mieux compris de la description et des dessins annexés parmi lesquels :
- la figure 1 représente une architecture adaptée pour mettre en oeuvre un procédé de détection d'intrusions décrit en relation avec la figure 2 ;
- la figure 2 représente les étapes du procédé de détection d'intrusions selon un premier exemple de réalisation ;
- la figure 3 est un schéma de dispositif de contrôle de la détection d'intrusions, selon un premier exemple de réalisation de l'invention.

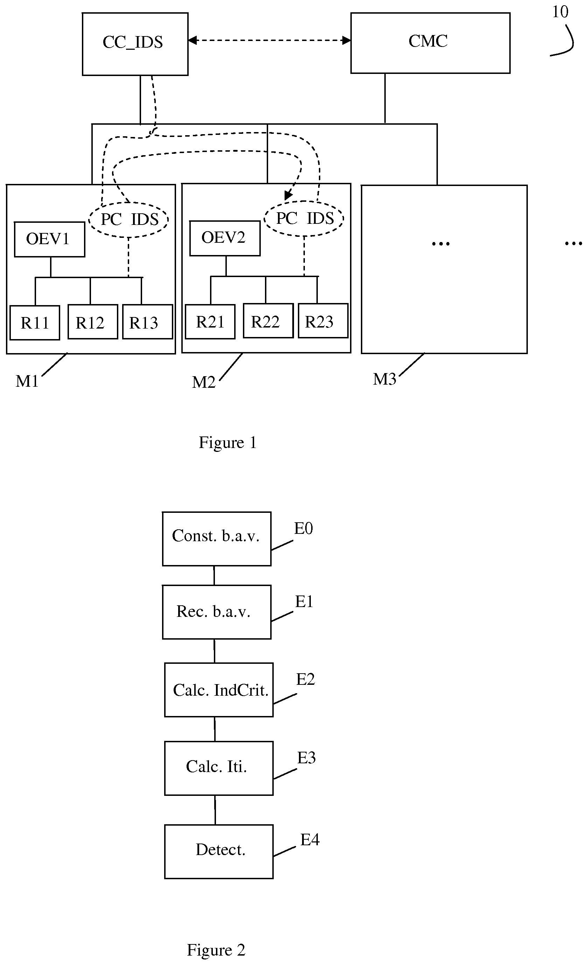

La figure 1 présente une architecture réseau basée sur le concept d'informatique en nuage (on parle habituellement de « cloud computing »), et adaptée pour mettre en oeuvre un procédé de détection d'intrusions selon l'invention.

De manière classique, une architecture d'un réseau 10 construite selon un modèle en cloud computing comprend une pluralité de machines physiques M1, M2, M3, ..., tels que des serveurs, organisée en réseau. Ce réseau 10 est adapté pour rendre des services S1, S2, S3, ... (non représentés sur la figure 1) à des utilisateurs (non représentés) qui font appel à ces services à distance, par exemple via un accès Internet. L'architecture est très flexible dans le sens où des ressources sont allouées à la demande, et libérées lorsqu'elles ne sont plus utilisées. Cette flexibilité est obtenue grâce à une dématérialisation (on parle habituellement de « virtualisation ») du système d'exploitation des machines physiques. La virtualisation consiste à dissocier les ressources logiques et physiques d'une machine afin d'optimiser l'utilisation de ses ressources physiques. Plus précisément, la virtualisation consiste à transformer des serveurs, des systèmes, des applications en entités logiques (ou « virtual machine ») pouvant cohabiter sur une seule machine physique et de façon quasi-transparente pour ces serveurs, systèmes et applications. Des ressources distinctes, en l'espèce les serveurs, systèmes et applications sont ainsi émulées sur la machine physique. Avec la virtualisation, on optimise l'utilisation des ressources physiques sous-jacentes telles que la puissance de calcul, la mémoire, en fonction des demandes des utilisateurs finaux.

Selon ce modèle, les machines physiques M1, M2, M3, ... hébergent, par le biais de la virtualisation, une pluralité de ressources virtuelles R11, R12, R13, R21, R22, R23, ... Chacune des ressources virtuelles R11, R12, R13, ... est apte à rendre un service ou un groupe de services à un ou plusieurs utilisateurs finaux. Par exemple la ressource virtuelle R11 correspond à une application de stockage de données, la ressource virtuelle R12 correspond à une suite bureautique, la ressource virtuelle R13 correspond à une application de messagerie instantanée.

Selon l'invention, chaque machine physique M1, M2, M3, ... correspondant à un environnement virtuel d'exécution héberge également un outil dédié d'évaluation des vulnérabilités OEV1, OEV2, OEV3, ... Un outil d'évaluation des vulnérabilités, par exemple OEV1 associé à l'environnement virtuel de la machine physique M1, est adapté pour évaluer et remonter à un centre de contrôle de détection d'intrusions CC_IDS des indicateurs de vulnérabilité associés aux ressources virtuelles hébergées sur la machine physique M1, en l'espèce les ressources R11, R12 et R13. Une vulnérabilité est une faille dans un système, nuisible à la sécurité de ce système et qui est susceptible d'être exploitée par un attaquant pour perpétrer une attaque. Par exemple, certaines vulnérabilités permettent à un attaquant d'exécuter des commandes sans y être autorisé, ou d'accéder illicitement à des données dont l'accès est protégé. Un indicateur de vulnérabilité associé à une ressource virtuelle permet de fournir une indication de la mesure dans laquelle la ressource est vulnérable à une attaque. Dans cet exemple de réalisation, l'indicateur de vulnérabilité est représenté par une valeur numérique. Plus cette valeur est élevée, plus la ressource est vulnérable. Le principe de fonctionnement de l'outil d'évaluation des vulnérabilités est identique à un outil qui fonctionnerait dans un environnement physique. Ainsi, en fonctionnement, l'outil d'évaluation des vulnérabilités, par exemple OEV1 :
- opère d'abord une découverte passive de l'environnement offert par la machine physique M1 qui l'héberge;
- corrèle des informations ainsi découvertes avec une base de vulnérabilités existante, puis
- produit pour chaque ressource virtuelle active de la machine physique un indicateur de vulnérabilité. On rappelle qu'une ressource active est une ressource démarrée.

On notera d'emblée qu'une base de vulnérabilités contient des informations techniques précises, détaillées et à jour sur un ensemble de vulnérabilités connues. Par exemple, une base connue de vulnérabilités est « OSVDB » (pour « The Open Source Vulnerability DataBase »). Dans une base OSVDB, les informations relatives à une vulnérabilité comprennent un numéro identifiant la vulnérabilité de façon unique, une description en langage naturel de la vulnérabilité, des noms de produits du commerce ou de configurations logicielles vulnérables, le cas échéant leur numéro de version, etc.

Dans un premier exemple de réalisation, la découverte passive de l'environnement offert par la machine physique M1 est opérée par l'outil OEV1 de manière classique au moyen d'une écoute passive d'un trafic réseau issu ou à destination des machines virtuelles hébergées par la machine physique M1. A cette fin, l'outil OEV1 analyse des champs des datagrammes IP circulant au niveau de la machine physique M1, par exemple au niveau du système d'exploitation de la machine physique M1. Cette analyse permet à l'outil OEV1 de déduire des informations précises sur la machine physique M1, et plus précisément sur les ressources virtuelles actives hébergées par la machine physique M1. Ainsi, l'outil OEV1 détecte la présence d'un système d'exploitation particulier, par exemple Linux, Windows, détermine un numéro de version de ce système, et détecte également la présence d'un service spécifique, par exemple un service de messagerie, un service de stockage. L'outil OEV1 caractérise ainsi les ressources virtuelles actives hébergées sur la machine physique M1 au moyen de données concrètes telles qu'une adresse « MAC » (pour « Media Access Control »), une adresse IP, un système d'exploitation, une application.

L'outil OEV1 corrèle ensuite les informations découvertes sur chacune des ressources virtuelles identifiées sur la machine physique M1 avec la base de vulnérabilités. En confrontant les informations obtenues lors de la découverte passive des ressources virtuelles hébergées par la machine physique M1 à la base de vulnérabilités, l'outil OEV1 identifie des ressources virtuelles présentes sur la machine physique M1 qui sont vulnérables à une ou des attaques existantes. L'outil OEV1 associe alors un indicateur de vulnérabilité à chacune des ressources virtuelles qu'il a identifiées sur la machine physique M1.

L'outil d'évaluation des vulnérabilités, par exemple OEV1, est donc adapté pour recenser les ressources virtuelles actives de la machine physique qui l'héberge et pour associer à chacune des ressources un indicateur de vulnérabilité, comme décrit ci-dessus. Dans un exemple de réalisation, l'indicateur est une valeur numérique. Plus cette valeur est élevée et plus la ressource est vulnérable.

Dans un autre exemple de réalisation, l'outil d'évaluation des vulnérabilités observe les accès à une ressource virtuelle de la machine physique à laquelle il est dédié et en déduit un indicateur de vulnérabilité de la ressource. Par exemple, l'outil OEV1 opère une analyse statistique des accès à la ressource virtuelle R12 et, selon la fréquence de ces accès et surtout la variabilité de cette fréquence, en déduit l'indicateur de vulnérabilité. Si l'outil OEV1 note une augmentation brutale de la fréquence d'accès à la ressource virtuelle R12, alors l'indicateur de vulnérabilité de la ressource R12 augmente.

L'invention n'est pas limitée à ces méthodes pour l'évaluation des indicateurs de vulnérabilité des ressources virtuelles hébergées par une machine physique. Ainsi, toute méthode permettant d'évaluer la vulnérabilité de ressources informatiques peut être utilisée par l'outil d'évaluation.

Selon l'invention, le réseau 10 comprend également le centre de contrôle de détection d'intrusions CC_IDS, agencé pour mettre en oeuvre le procédé de détection d'intrusions décrit en relation avec la figure 2. En particulier, le centre de contrôle de détection d'intrusions CC_IDS est apte à calculer un itinéraire de détection d'intrusions défini par une suite de ressources virtuelles à surveiller, et à mettre en oeuvre une opération de détection d'intrusions sur les ressources virtuelles qui composent l'itinéraire. A cette fin, le centre de contrôle de détection d'intrusions CC_IDS est agencé pour commander au moins un point de contrôle de détection d'intrusions PC_IDS pour surveiller les ressources de l'itinéraire. Plus précisément, le centre de contrôle de détection CC_IDS est adapté pour :
- créer le point de contrôle de détection PC_IDS sous la forme d'une machine virtuelle hébergée par une machine physique en réservant les ressources nécessaires à une activation ultérieure;
- commander l'activation du point de contrôle de détection PC_IDS sur la machine physique pour surveiller une ressource virtuelle de l'itinéraire hébergée par la machine physique;
- commander la libération du point de contrôle de détection PC_IDS, lorsque la surveillance de la ressource virtuelle est terminée.

Le réseau 10 comprend également un centre CMC de gestion de l'architecture du cloud (pour « Cloud computing Management Center », en anglais), agencé pour gérer de façon globale toutes les ressources, physiques et virtuelles du réseau 10. Le centre de gestion de l'architecture du cloud CMC est ainsi apte à commander la création, l'activation et la libération de ressources virtuelles sur des machines physiques, en fonction des besoins des utilisateurs. Le centre de gestion CMC est également agencé pour fournir des informations complémentaires sur des ressources virtuelles du réseau 10 au centre de contrôle de détection d'intrusions CC_IDS. Par exemple, le centre de gestion CMC qui possède une vision globale de toutes les ressources qui composent l'architecture du réseau 10 est apte à fournir au centre de contrôle de détection CC_IDS des informations sur une ressource virtuelle inactive qui serait hébergée par une machine physique. Une ressource inactive est une ressource qui ne communique pas avec d'autres ressources. Elle peut ainsi ne pas être observée par l'outil d'évaluation des vulnérabilités lors d'une opération de découverte passive de l'environnement offert par une machine physique. De cette façon, le centre de contrôle de détection CC_IDS peut tenir compte de cette ressource inactive lors du calcul de l'itinéraire des ressources à surveiller.

Les étapes d'un procédé de détection d'intrusions dans un réseau 10 conforme à une architecture en cloud computing, selon un mode particulier de réalisation, vont maintenant être décrites en relation avec la figure 2.

Le réseau 10 est conforme à une architecture en cloud computing telle que décrite en relation avec la figure 1.

Dans une étape initiale E0 de construction d'une base d'audit de vulnérabilités et d'envoi, l'outil d'évaluation des vulnérabilités OEV1 dédié à la machine physique M1 construit une base d'audit de vulnérabilités associée aux ressources virtuelles R11, R12, R13, ... présentes sur la machine physique M1. A cette fin, et conformément au fonctionnement de l'outil d'évaluation des vulnérabilités décrit en relation avec la figure 1, l'outil OEV1 :
- opère une découverte passive de l'environnement virtuel de la machine physique M1 qui l'héberge. Par exemple, l'outil OEV1 utilise un scanner passif de vulnérabilités pour analyser les datagrammes des trames IP qui circulent sur la machine physique M1 afin d'identifier les caractéristiques des ressources virtuelles actives présentes sur la machine physique M1, puis
- corrèle les caractéristiques ainsi découvertes avec une base de vulnérabilités existante, afin d'attribuer un indicateur de vulnérabilité à chacune des ressources virtuelles identifiées. La base d'audit de vulnérabilités enregistre pour chacune des ressources virtuelles actives observées sur la machine physique M1, en l'espèce R11, R12, R13, ..., une donnée de sécurité comprenant un identifiant de la ressource virtuelle et l'indicateur de vulnérabilité associé.

En fin d'étape E0 de construction et d'envoi, l'outil OEV1 envoie au centre de contrôle de détection d'intrusions CC_IDS la base d'audit de vulnérabilités qui comprend l'ensemble des données de sécurité relatives aux ressources.

L'étape E0 de construction de la base d'audit de vulnérabilités et d'envoi est exécutée périodiquement, selon une période paramétrable au niveau du centre de contrôle de détection d'intrusions CC_IDS. Lors d'une exécution ultérieure de cette étape E0 de construction et d'envoi, la base d'audit de vulnérabilités est mise à jour. Cette exécution périodique de l'étape E0 permet ainsi à l'outil OEV1 de prendre en compte l'activation ou la libération de ressources virtuelles sur la machine physique M1. De telles opérations d'activation et de libération sont inhérentes à une architecture en cloud computing.

L'étape E0 de construction et d'envoi est décrite par rapport à la machine physique M1. Bien sûr, ce qui se passe sur la machine physique M1 se passe de la même façon sur les machines physiques M2, M3, ... au moyen des outils d'évaluation des vulnérabilités respectifs OEV2, OEV3, ...

Dans une étape E1 de réception des données de sécurité, le centre de détection d'intrusions CC_IDS reçoit des outils d'évaluation de vulnérabilités OEV1, OEV2, OEV3, ... les bases d'audit de vulnérabilités des environnements offerts par les machines physiques M1, M2, M3, ... envoyées lors de l'étape précédente E0. Ainsi, le centre de détection CC_IDS reçoit les indicateurs de vulnérabilité de toutes les ressources virtuelles actives dans le réseau 10.

Dans une étape E2 de calcul de niveaux de criticité, le centre de détection CC_IDS calcule un niveau de criticité de la vulnérabilité pour chaque ressource virtuelle active du réseau 10 pour laquelle le centre de détection CC_IDS a reçu un indicateur de vulnérabilité. La criticité d'une vulnérabilité associée à une ressource est liée à l'intensité, ou la gravité, d'un incident de sécurité lorsqu'il se produit sur la ressource. Ainsi, une ressource virtuelle, par exemple une application, peut être intrinsèquement peu vulnérable : c'est le cas d'une application maîtrisée, mise à jour régulièrement et sur laquelle des logiciels pour corriger un bug de sécurité sont régulièrement installés (on parle habituellement de patch de sécurité). Cependant, la vulnérabilité résiduelle peut rester très critique : c'est le cas par exemple d'une application visant à la confidentialité de données.

Le niveau de criticité d'une vulnérabilité associé à une ressource virtuelle est par exemple une valeur numérique allant de 1 à 4 : plus la valeur est élevée et plus la criticité de la vulnérabilité est importante.

Afin de calculer le niveau de criticité d'une vulnérabilité associée à une ressource virtuelle, le centre de détection CC_IDS agrège l'indicateur de vulnérabilité de la ressource établi par l'outil d'évaluation de vulnérabilités OEV1 au cours de l'étape E0 avec différents indicateurs, parmi lesquels :
- l'indicateur de vulnérabilité d'autres ressources virtuelles qui sont en relation avec la ressource virtuelle. Une première ressource virtuelle est dite en relation avec une deuxième ressource virtuelle si par exemple elle se trouve sur un même réseau construit sur l'architecture du cloud, ou si elle échange des données avec cette deuxième ressource afin de lui fournir un service, ou si elle cohabite avec cette deuxième ressource virtuelle sur une même machine physique. En effet, les relations entre ressources virtuelles peuvent influer sur la criticité d'une vulnérabilité associée à une ressource virtuelle. Ainsi, plus une ressource virtuelle vulnérable entretient de relations avec d'autres ressources elles-mêmes vulnérables, et plus la criticité de sa vulnérabilité augmente. Les autres ressources virtuelles constituent l'environnement proche de la ressource virtuelle. Ainsi, plus cet environnement est vulnérable, et plus l'impact d'un incident de sécurité risque d'être important pour la ressource virtuelle concernée. La connaissance des autres ressources virtuelles qui sont en relation avec la ressource virtuelle est fournie par le centre CMC de gestion de l'architecture du cloud qui possède une vision globale de toute l'architecture du réseau 10 et de ses ressources. Une fois les ressources virtuelles identifiées, le centre de contrôle de détection d'intrusions CC_IDS accède aux indicateurs de vulnérabilité de ces ressources qui lui ont été remontés au cours de l'étape E1 de réception par les outils d'évaluation de vulnérabilité dédiés aux machines physiques qui hébergent les autres ressources virtuelles ;
- un niveau de qualité de service associé à la ressource virtuelle. Ce niveau de qualité de service fait en général l'objet d'un contrat entre le fournisseur de services qui opère un réseau pour offrir un service, et un utilisateur qui a souscrit au service. Si le niveau de qualité de service contractualisé est élevé, alors la criticité de la vulnérabilité associée à la ressource augmente. Par exemple, un niveau de qualité de service élevé est en général demandé pour une ressource temps réel, par exemple une application de streaming vidéo ;
- tout indicateur permettant d'intervenir dans la définition de la criticité de la vulnérabilité associée à la ressource. Par exemple, une deuxième donnée de sécurité relative à la ressource virtuelle courante est obtenue lors d'une étape ultérieure E4 de détection. Cette deuxième donnée peut intervenir, en tant que deuxième indicateur de vulnérabilité associé à la ressource virtuelle dans le calcul du niveau de criticité.

Au terme de cette étape E2 de calcul de niveaux de criticité, le centre de contrôle de détection CC_IDS possède une liste de ressources virtuelles actives du réseau 10 et, pour chacune de ces ressources, un niveau associé de criticité de la vulnérabilité.

Dans une étape E3 de calcul d'un itinéraire, le centre de détection CC_IDS calcule un itinéraire composé d'une suite de ressources virtuelles actives à surveiller qui font partie de la liste obtenue au terme de l'étape E2 de calcul d'indicateurs de criticité. L'itinéraire comprend toutes les ressources virtuelles actives de la liste obtenue au cours de l'étape E2 et qui doivent être surveillées par un point de contrôle de détection PC_IDS apte à mettre en oeuvre une détection d'intrusions. Les ressources apparaissent au moins une fois dans l'itinéraire, en fonction de leur niveau de criticité. Lors de la mise en oeuvre d'une opération de détection d'intrusions, le point de contrôle de détection PC_IDS, commandé par le centre de contrôle de détection CC_IDS parcourt l'itinéraire et met en oeuvre une détection d'intrusions successivement sur chaque ressource de l'itinéraire.

Lors de l'étape E3, le centre de contrôle de détection d'intrusions CC_IDS construit l'itinéraire en tenant compte des niveaux de criticité de vulnérabilité associés à chaque ressource virtuelle, calculés au cours de l'étape E2. L'itinéraire de détection d'intrusions est défini par une suite de ressources virtuelles de la liste de ressources virtuelles obtenues à l'étape E2, intégrées et ordonnées dans la suite en fonction des niveaux respectifs de criticité de vulnérabilité affectés aux ressources virtuelles. Une ressource peut apparaître plusieurs fois dans l'itinéraire, si son niveau de criticité est important. Ainsi, une première ressource dont le niveau de criticité est élevé apparaîtra plusieurs fois dans l'itinéraire et sera donc surveillée plus souvent par un point de contrôle de détection PC_IDS qu'une deuxième ressource dont le niveau de criticité associé est plus faible et qui, de ce fait, ne sera surveillée par exemple qu'une fois dans l'itinéraire.

Pour illustrer la construction de l'itinéraire, supposons que le centre de contrôle de détection CC_IDS a calculé pour les ressources virtuelles actives R11, R12, R13 et R21 les niveaux de criticité respectifs suivants : 1, 2, 1, 4. Dans cet exemple, la vulnérabilité de la ressource R21 est donc très critique, celle des ressources R11 et R13 l'est beaucoup moins. Un exemple d'itinéraire cohérent avec les indicateurs de criticité respectifs des ressources est : R21-R11-R21-R12-R21-R13-R21-R12. Dans cet itinéraire, la ressource R21 apparaît quatre fois plus souvent que la ressource R11 ; elle est donc destinée à être visitée quatre fois plus souvent par le point de contrôle de détection d'intrusions PC_IDS que la ressource R11, de vulnérabilité moins critique. On remarque qu'une ressource virtuelle peut être visitée plusieurs fois, pendant que d'autres ne sont visitées qu'une fois.

Dans un autre exemple de réalisation, la fréquence d'apparition d'une ressource virtuelle dans un itinéraire est limitée à une valeur prédéterminée, de manière à éviter qu'une ressource virtuelle d'indicateur de criticité associé très élevé ne monopolise le point de contrôle de détection PC_IDS.

Dans l'étape suivante E4 de détection, le centre de contrôle de détection CC_IDS commande la mise en oeuvre d'une opération de détection d'intrusions sur les ressources virtuelles qui composent l'itinéraire calculé au cours de l'étape précédente. A cette fin, pour une ressource virtuelle courante de l'itinéraire, le centre de contrôle de détection d'intrusions CC_IDS commande l'activation d'une machine virtuelle de détection d'intrusions préalablement créée sur la machine physique qui héberge la ressource courante. Cette machine virtuelle de détection, appelée point de contrôle de détection PC_IDS est un système de détection d'intrusions destiné à surveiller la ressource virtuelle courante pendant une période de temps donnée, paramétrée par le centre de contrôle de détection CC_IDS. Par exemple, le point de contrôle de détection PC_IDS effectue une détection d'intrusions sur la ressource courante selon une méthode différente de celle utilisée par l'outil d'évaluation des vulnérabilités au cours de l'étape E0. Par exemple, le point de contrôle de détection PC_IDS fait un scan des ports ouverts de la ressource virtuelle courante. Un tel scan de ports permet de mettre en avant des vulnérabilités non détectées par l'outil d'évaluation des vulnérabilités au cours de l'étape E0. La détection d'intrusions opérée sur la ressource virtuelle courante permet au point de contrôle de détection PC_IDS d'attribuer à la ressource virtuelle courante un deuxième indicateur de vulnérabilité. Une deuxième donnée de sécurité comprenant l'identifiant de la ressource virtuelle courante et le deuxième indicateur de vulnérabilité est alors transmise au centre de contrôle de détection CC_IDS. Cette deuxième donnée de sécurité peut être utilisée lors d'une exécution ultérieure des étapes E2 de calcul des niveaux de criticité et E3 de calcul d'un itinéraire afin de réactualiser l'itinéraire le cas échéant. Au terme d'une période déterminée, le centre de détection CC_IDS commande la libération de la machine virtuelle qui constitue le point de contrôle PC_IDS et réitère l'étape E4 de détection pour une ressource suivante de l'itinéraire. Ainsi, le centre de contrôle de détection CC_IDS commande le déplacement et la mise en oeuvre du point de contrôle PC_IDS le long de l'itinéraire calculé. Le point de contrôle de détection PC_IDS constitue ainsi un système de détection mobile, commandé par le centre de contrôle de détection d'intrusions CC_IDS et surveillant des ressources virtuelles en suivant l'itinéraire calculé.

Dans un autre exemple de réalisation, le système de détection d'intrusions utilise un scanner actif de vulnérabilités. Les scanners actifs interagissent directement avec la cible en envoyant des paquets malicieux afin de tester la présence ou l'absence de vulnérabilités.

Par ailleurs, comme dans un système classique de détection d'intrusions, le résultat de cette détection est remonté sous forme d'alertes à un opérateur du centre de détection CC_IDS qui le cas échéant peut mettre en oeuvre des mesures de réaction.

Le temps pendant lequel une ressource virtuelle est surveillée au moyen du point de contrôle PC_IDS est paramétrable au niveau du centre de détection CC_IDS.

De même, la durée pendant laquelle l'étape E4 de détection est mise en oeuvre est paramétrable. On comprend ainsi qu'un même itinéraire, calculé au cours de l'étape E3 peut être parcouru plusieurs fois avant qu'un nouveau cycle d'étapes E0 à E4 ne soit exécuté.

On comprend ainsi que les étapes E0 à E4 sont répétées dans le temps. Les étapes E0 et E4 permettent de tenir compte de l'activation ou/et de la libération de ressources virtuelles, et de réactualiser l'itinéraire au mieux par rapport aux ressources virtuelles en présence à un instant donné.

Dans un exemple de réalisation, le temps pendant lequel une ressource est surveillée par le point de contrôle PC_IDS au cours de l'étape E4 de détection dépend du niveau de criticité de vulnérabilité associé à une ressource ; ainsi, plus cet indicateur est élevé et plus le temps de surveillance est élevé.

Dans une variante de réalisation, le centre de contrôle de détection CC_IDS limite la mobilité d'un point de contrôle PC_IDS entre différentes machines physiques. Ainsi, si une première ressource virtuelle de l'itinéraire est hébergée sur une première machine physique, si une deuxième ressource virtuelle de niveau de criticité identique qui suit la première ressource dans l'itinéraire est sur une deuxième machine physique, et si une troisième ressource virtuelle à surveiller de niveau de criticité identique est sur la première machine physique, alors l'itinéraire est optimisé de manière à intervertir l'ordre dans lequel apparaissent les deuxième et troisième ressources virtuelles à surveiller. Ainsi, le point de contrôle de détection PC_IDS va surveiller la première ressource, puis la troisième ressource, toutes deux étant hébergées par la même machine physique. Ainsi, la machine virtuelle associée au point de contrôle de détection PC_IDS est activée une première fois sur la première machine physique et une deuxième fois sur la deuxième machine physique, au lieu de trois fois.

Dans un autre exemple de réalisation, le centre de contrôle de détection d'intrusions CC_IDS gère une pluralité de points de contrôle de détection PC_IDS de manière à optimiser les capacités de détection d'intrusions du système. Ainsi, la détection est optimisée dans le sens où des opérations de surveillance de ressources virtuelles ont lieu en parallèle. Le nombre de points de contrôle PC_IDS pouvant être simultanément en opération dépend par exemple des capacités du centre de contrôle de détection CC_IDS, d'une volumétrie d'alertes remontées, d'un nombre de ressources virtuelles actives.

Ainsi, contrairement à un système de détection d'intrusions classique qui positionne des sondes statiques en des points précis d'un réseau à observer et qui analyse toutes les alertes remontées par ces sondes, le système de détection d'intrusions selon l'invention d'une part priorise les alertes qu'il veut recevoir et analyser en fonction du niveau de criticité de vulnérabilité d'une ressource virtuelle, et d'autre part échantillonne ces alertes en s'intéressant successivement aux machines virtuelles qui figurent dans l'itinéraire.

Par ailleurs, l'itinéraire peut être recalculé. Ainsi, le centre CMC de gestion de la sécurité de l'architecture du cloud prend en compte toute modification qui intervient dans les ressources virtuelles du cloud : apparition d'une machine virtuelle suite à une sollicitation d'un utilisateur, ou libération d'une ressource virtuelle qui n'est plus sollicitée.

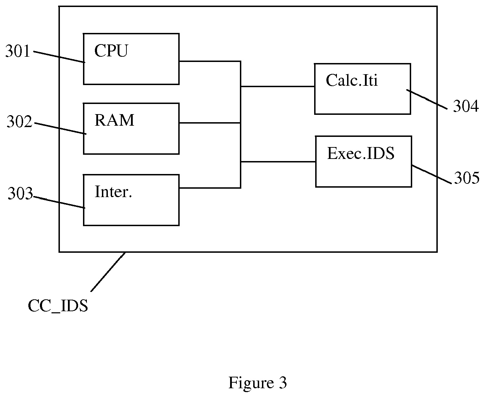

Un dispositif de contrôle de détection d'intrusions CC_IDS va maintenant être décrit en relation avec la figure 3.

Un tel dispositif de contrôle de détection CC_IDS est un équipement informatique tel qu'un terminal, ou un serveur. Un dispositif de contrôle de détection CC_IDS est apte à calculer un itinéraire composé de ressources virtuelles actives de l'architecture en cloud computing à surveiller, et à commander un point de contrôle de détection PC_IDS de manière à ce que le point de contrôle mette en oeuvre une détection d'intrusions sur une ressource de l'itinéraire. Le dispositif de contrôle de détection CC_IDS comprend :
- un microprocesseur 301, ou "CPU" (de l'anglais "Central Processing Unit"), destiné à charger des instructions en mémoire, à les exécuter, à effectuer des opérations ;
- un ensemble de mémoires, dont une mémoire volatile 302, ou "RAM" (pour "Random Access Memory") utilisée pour exécuter des instructions de code, stocker des variables, etc. ;
- des interfaces de communication 303, adaptées pour communiquer avec le centre CMC de gestion de l'architecture du cloud. En particulier, le dispositif de contrôle de détection CC_IDS utilise ces interfaces pour recevoir des outils d'évaluation des vulnérabilités dédiés à chacune des machines physiques, les données de sécurité associées aux ressources virtuelles actives sur les machines physiques. Le dispositif de contrôle de détection CC_IDS peut obtenir également du centre de gestion CMC des informations de sécurité sur des ressources virtuelles du cloud pour lesquelles les outils d'évaluation des vulnérabilités n'ont pas fourni de données de sécurité ; ça peut être le cas de ressources virtuelles qui ne communiquent pas lors de l'évaluation passive mise en oeuvre par les outils d'évaluation des vulnérabilités. Les interfaces de communication 303 permettent également au dispositif de contrôle de détection d'intrusions CC_IDS de commander le point de contrôle de détection PC_IDS ;

- un module 304 de calcul d'un itinéraire, adapté pour calculer un itinéraire de détection d'intrusions. L'itinéraire est défini par une suite de ressources virtuelles à surveiller, ordonnées selon leur niveau de criticité de vulnérabilité respectif. Une ressource de l'itinéraire peut apparaître plusieurs fois si son niveau de criticité associé est élevé. En effet, dans ce cas, la ressource est surveillée par le point de contrôle PC_IDS plus souvent qu'une ressource de criticité plus faible. Le module 304 de calcul est agencé pour mettre en oeuvre l'étape E3 de calcul de l'itinéraire du procédé de détection décrit précédemment ;
- un module d'exécution 305, agencé pour exécuter une opération de détection d'intrusions en suivant l'itinéraire calculé. Le module d'exécution 305 est ainsi adapté pour commander l'activation et la libération d'un point de contrôle de détection PC_IDS en tant que machine virtuelle sur la machine physique qui héberge une ressource virtuelle courante de l'itinéraire, pour lancer la détection d'intrusions du point de contrôle de détection, et pour libérer le point de contrôle de détection PC_IDS, une fois la détection d'intrusions mise en oeuvre. Le temps pendant lequel la détection d'intrusions est mise en oeuvre par le point de contrôle PC_IDS est géré par le dispositif de contrôle de détection CC_IDS. Le module d'exécution 305 est agencé pour mettre en oeuvre l'étape E4 de détection du procédé précédemment décrit.

Les interfaces réseau 303, le module 304 de calcul d'un itinéraire et le module 305 d'exécution de l'opération de détection d'intrusions sont de préférence des modules logiciels comprenant des instructions logicielles pour faire exécuter les étapes du procédé de détection d'intrusions précédemment décrit.

L'invention concerne donc aussi :
- un programme d'ordinateur comportant des instructions pour la mise en oeuvre du procédé de détection tel que décrit précédemment lorsque ce programme est exécuté par un processeur du dispositif centre de détection ;
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'invention concerne également un système de détection d'intrusions comprenant un dispositif de contrôle de détection d'intrusions CC_IDS selon l'invention et un point de contrôle de détection d'intrusions PC_IDS, adapté pour mettre en oeuvre une opération de détection d'intrusions sur une ressource virtuelle, à la demande du dispositif de détection.

## Revendications

1. Procédé de détection d'intrusions sur un ensemble de ressources virtuelles dans un système informatique comprenant au moins une machine physique hébergeant ledit ensemble de ressources virtuelles qui comporte les étapes de :
- calcul (E3) d'un itinéraire de détection d'intrusions défini par une suite de ressources virtuelles dudit ensemble, intégrées et ordonnées dans la suite en fonction de niveaux respectifs de criticité de vulnérabilité affectés aux ressources virtuelles dudit ensemble, un niveau de criticité de vulnérabilité d'une ressource virtuelle étant calculé en agrégeant un indicateur de vulnérabilité de ladite ressource virtuelle, obtenu par corrélation d'informations issues d'une découverte passive de la machine qui héberge ladite ressource virtuelle avec une base de vulnérabilités, avec différents indicateurs, parmi lesquels l'indicateur de vulnérabilité d'autres ressources virtuelles qui sont en relation avec ladite ressource virtuelle, un niveau de qualité de service associé à ladite ressource virtuelle, tout indicateur permettant d'intervenir dans la définition de la criticité de la vulnérabilité associée à ladite ressource virtuelle, dans lequel, lorsque la suite comprend deux ressources de niveaux respectifs de criticité de vulnérabilité n1 et n2, avec n1 > n2, la ressource de niveau de criticité n1 apparaît dans l'itinéraire un nombre de fois supérieur à celui de la ressource de niveau n2,
- exécution (E4) d'une opération de détection d'intrusions en suivant l'itinéraire calculé.

2. Procédé selon la revendication 1, dans lequel ledit ensemble de ressources virtuelles étant hébergé par une pluralité de machines physiques, lorsque l'itinéraire prévoit le passage d'une première machine physique à une deuxième machine physique, il est prévu :
- une libération d'un point de contrôle de détection d'intrusions hébergé par la première machine physique,
- une activation d'un point de contrôle de détection d'intrusions sous la forme d'une machine virtuelle hébergée par la deuxième machine physique.

3. Procédé selon la revendication 1 dans lequel, lorsque l'itinéraire prévoit le passage d'une première machine virtuelle à une deuxième machine virtuelle, la première et deuxième machines virtuelles étant hébergées par la même machine physique, il est prévu d'utiliser un même point de contrôle de détection d'intrusions sur les deux machines virtuelles.

4. Procédé selon la revendication 1, comprenant une étape préalable de réception par un dispositif de contrôle de détection d'intrusions en provenance d'un outil d'évaluation de vulnérabilités d'un indicateur de vulnérabilité associé à la ressource virtuelle.

5. Procédé selon la revendication précédente, dans lequel l'étape d'évaluation du niveau de criticité d'une première ressource virtuelle est réalisée par agrégation de l'indicateur de vulnérabilité reçu pour la première ressource avec au moins un indicateur de vulnérabilité d'une deuxième ressource virtuelle, la deuxième ressource virtuelle étant en relation avec la première ressource virtuelle.

6. Procédé selon la revendication 4, dans lequel l'indicateur de vulnérabilité associé à une machine virtuelle est reçu selon une fréquence prédéfinie.

7. Procédé selon l'une des revendications précédentes, dans lequel la ressource virtuelle de l'itinéraire dont le niveau de criticité associé est le plus élevé apparaît dans l'itinéraire un nombre de fois inférieur à une valeur prédéterminée.

8. Dispositif (CC_IDS) de contrôle de détection d'intrusions d'un ensemble de ressources virtuelles dans un système informatique comprenant au moins une machine physique hébergeant ledit ensemble de ressources virtuelles, comprenant :
- des moyens (304) de calcul d'un itinéraire, agencés pour calculer un itinéraire de détection d'intrusions défini par une suite de ressources virtuelles à surveiller à partir des ressources virtuelles dudit ensemble, ajoutées et ordonnées dans la suite en fonction de niveaux respectifs de criticité de vulnérabilité affectés aux ressources virtuelles dudit ensemble,
- des moyens de calcul d'un niveau de criticité de vulnérabilité d'une ressource virtuelle en agrégeant un indicateur de vulnérabilité de ladite ressource virtuelle, obtenu par corrélation d'informations issues d'une découverte passive de la machine qui héberge ladite ressource virtuelle avec une base de vulnérabilités, avec différents indicateurs, parmi lesquels l'indicateur de vulnérabilités d'autres ressources virtuelles qui sont en relation avec ladite ressource virtuelle, un niveau de qualité de service associé à ladite ressource virtuelle, tout indicateur permettant d'intervenir dans le définition de la criticité de la vulnérabilité associée à ladite ressource virtuelle, dans lequel lorsque la suite comprend deux ressources de niveaux respectifs de criticité de vulnérabilité n1 et n2, avec n1 > n2, la ressource de niveau de criticité n1 apparaît dans l'itinéraire un nombre de fois supérieur à celui de la ressource de niveau n2,
- des moyens (305) d'exécution, agencés pour exécuter une opération de détection d'intrusions en suivant l'itinéraire calculé.

9. Système de détection d'intrusions sur un ensemble de ressources virtuelles dans un système informatique comprenant au moins une machine physique hébergeant ledit ensemble de ressources virtuelles, comprenant :
- un dispositif de contrôle de détection d'intrusions selon la revendication 8,
- un point de contrôle de détection d'intrusions, adapté pour mettre en oeuvre une opération de détection d'intrusions sur une ressource virtuelle, à la demande du dispositif de contrôle de détection d'intrusions.

10. Programme sur un support de données et chargeable dans la mémoire d'un ordinateur, le programme comprenant des portions de code pour l'exécution des étapes du procédé selon l'une des revendications 1 à 7, lorsque le programme est exécuté sur ledit ordinateur.

11. Support de données sur lequel est enregistré le programme d'ordinateur selon la revendication 10.

## Patentansprüche

1. Verfahren zur Erkennung von Angriffen auf eine Einheit virtueller Ressourcen in einem Informationssystem, umfassend mindestens eine physische Maschine, welche die Einheit virtueller Ressourcen aufnimmt, das die folgenden Schritte umfasst:
- Berechnen (E3) eines Itinerars zur Erkennung von Angriffen, das durch eine Folge virtueller Ressourcen der Einheit definiert wird, welche in der Folge entsprechend jeweiligen Ebenen der Vulnerabilitätskritikalität integriert und angeordnet sind, die den virtuellen Ressourcen der Einheit zugeordnet sind, wobei eine Ebene der Vulnerabilitätskritikalität einer virtuellen Ressource berechnet wird, indem ein Vulnerabilitätsindikator der virtuellen Ressource aggregiert wird, der durch Korrelation von Informationen, die von einer passiven Erkundung der Maschine stammen, welche die virtuelle Ressource mit einer Vulnerabilitätsdatenbank aufnimmt, mit verschiedenen Indikatoren erhalten wird, unter denen sich der Vulnerabilitätsindikator anderer virtueller Ressourcen befindet, die mit der virtuellen Ressource in Beziehung stehen, wobei eine Dienstqualitätsebene mit der virtuellen Ressource assoziiert ist, wobei jeder Indikator eine Intervention in die Definition der Vulnerabilitätskritikalität gestattet, die mit der virtuellen Ressource assoziiert ist,
wobei, wenn die Folge zwei Ressourcen mit jeweiligen Ebenen der Vulnerabilitätskritikalität n1 und n2 umfasst, wobei n1 > n2, die Ressource der Kritikalitätsebene n1 in dem Itinerar eine Anzahl von Malen auftritt, die größer ist als jene der Ressource der Ebene n2,
- Ausführen (E4) einer Operation zur Erkennung von Angriffen durch Befolgen des berechneten Itinerars.

2. Verfahren nach Anspruch 1, bei dem, wobei die Einheit virtueller Ressourcen in mehreren physischen Maschinen aufgenommen ist, wenn das Itinerar den Übergang von einer ersten physischen Maschine zu einer zweiten physischen Maschine vorsieht, Folgendes vorgesehen wird:
- eine Freigabe eines Steuerpunkts zur Erkennung von Angriffen, der in der ersten physischen Maschine aufgenommen ist,
- eine Aktivierung eines Steuerpunkts zur Erkennung von Angriffen in der Form einer virtuellen Maschine, die in der zweiten physischen Maschine aufgenommen ist.

3. Verfahren nach Anspruch 1, bei dem, wenn das Itinerar den Übergang von einer ersten virtuellen Maschine zu einer zweiten virtuellen Maschine vorsieht, wobei die erste und die zweite virtuelle Maschine in derselben physischen Maschine aufgenommen sind, vorgesehen wird, denselben Steuerpunkt zur Erkennung von Angriffen auf die beiden virtuellen Maschinen zu verwenden.

4. Verfahren nach Anspruch 1, umfassend einen vorhergehenden Schritt des Empfangs eines Vulnerabilitätsindikators, der mit der virtuellen Ressource assoziiert ist, durch eine Steuervorrichtung zur Erkennung von Angriffen von einem Evaluierungswerkzeug für Vulnerabilitäten.

5. Verfahren nach dem vorhergehenden Anspruch, bei dem der Evaluierungsschritt der Kritikalitätsebene einer ersten virtuellen Ressource durch Aggregation des Vulnerabilitätsindikators, der für die erste Ressource empfangen wird, mit mindestens einem Vulnerabilitätsindikator einer zweiten virtuellen Ressource durchgeführt wird, wobei die zweite virtuelle Ressource mit der ersten virtuellen Ressource in Beziehung steht.

6. Verfahren nach Anspruch 4, bei dem der Vulnerabilitätsindikator, der mit einer virtuellen Maschine assoziiert ist, gemäß einer vordefinierten Frequenz empfangen wird.

7. Verfahren nach einem der vorhergehenden Ansprüche, bei dem die virtuelle Ressource des Itinerars, deren assoziierte Kritikalitätsebene die höchste ist, in dem Itinerar eine Anzahl von Malen auftritt, die kleiner ist als ein vorbestimmter Wert.

8. Vorrichtung (CC_IDS) zur Steuerung der Erkennung von Angriffen einer Einheit virtueller Ressourcen in einem Informationssystem, umfassend mindestens eine physische Maschine, welche die Einheit virtueller Ressourcen aufnimmt, umfassend:
- Mittel (304) zur Berechnung eines Itinerars, die eingerichtet sind, ein Itinerar zur Erkennung von Angriffen zu berechnen, das durch eine Folge virtueller Ressourcen definiert wird, die unter den virtuellen Ressourcen der Einheit zu überwachen sind, welche in der Folge entsprechend jeweiligen Ebenen der Vulnerabilitätskritikalität hinzugefügt und angeordnet sind, die den virtuellen Ressourcen der Einheit zugeordnet sind,
- Mittel zur Berechnung einer Ebene der Vulnerabilitätskritikalität einer virtuellen Ressource, indem ein Vulnerabilitätsindikator der virtuellen Ressource aggregiert wird, der durch Korrelation von Informationen, die von einer passiven Erkundung der Maschine stammen, welche die virtuelle Ressource mit einer Vulnerabilitätsdatenbank aufnimmt, mit verschiedenen Indikatoren erhalten wird, unter denen sich der Vulnerabilitätsindikator anderer virtueller Ressourcen befindet, die mit der virtuellen Ressource in Beziehung stehen, wobei eine Dienstqualitätsebene mit der virtuellen Ressource assoziiert ist, wobei jeder Indikator eine Intervention in die Definition der Vulnerabilitätskritikalität gestattet, die mit der virtuellen Ressource assoziiert ist,
wobei, wenn die Folge zwei Ressourcen mit jeweiligen Ebenen der Vulnerabilitätskritikalität n1 und n2 umfasst, wobei n1 > n2, die Ressource der Kritikalitätsebene n1 in dem Itinerar eine Anzahl von Malen auftritt, die größer ist als jene der Ressource der Ebene n2,
- Ausführungsmittel (305), die eingerichtet sind, eine Operation zur Erkennung von Angriffen durch Befolgen des berechneten Itinerars auszuführen.

9. System zur Erkennung von Angriffen auf eine Einheit virtueller Ressourcen in einem Informationssystem, umfassend mindestens eine physische Maschine, welche die Einheit virtueller Ressourcen aufnimmt, umfassend:
- eine Steuervorrichtung zur Erkennung von Angriffen nach Anspruch 8,
- einen Steuerpunkt zur Erkennung von Angriffen, der geeignet ist, eine Operation zur Erkennung von Angriffen auf eine virtuelle Ressource, auf Aufforderung durch die Steuervorrichtung zur Erkennung von Angriffen, durchzuführen.

10. Programm auf einem Datenträger und ladbar in den Speicher eines Rechners, wobei das Programm Codeabschnitte zur Ausführung der Schritte des Verfahrens nach einem der Ansprüche 1 bis 7 umfasst, wenn das Programm auf dem Rechner ausgeführt wird.

11. Datenträger, auf welchem das Rechnerprogramm nach Anspruch 11 aufgezeichnet ist.

## Claims

1. Method for detecting intrusions on a set of virtual resources in a computer system comprising at least one physical machine hosting said set of virtual resources, which comprises the steps of:
- calculating (E3) an intrusion detection itinerary defined by a sequence of virtual resources from said set, which resources are integrated and ordered within the sequence on the basis of respective vulnerability criticality levels assigned to the virtual resources of said set, a vulnerability criticality level of a virtual resource being calculated by aggregating a vulnerability indicator of said virtual resource, obtained by correlating information arising from a passive discovery of the machine hosting said virtual resource with a vulnerability database, with various indicators, among which the vulnerability indicator of other virtual resources that are related to said virtual resource, a quality-of-service level associated with said virtual resource, any indicator making it possible to intervene in the definition of the criticality of the vulnerability associated with said virtual resource,
in which, when the sequence comprises two resources of respective vulnerability criticality levels n1 and n2, where n1 > n2, the resource of criticality level n1 appears in the itinerary a greater number of times than the resource of level n2,
- carrying out (E4) an intrusion detection operation, following the calculated itinerary.

2. Method according to Claim 1, in which, said set of virtual resources being hosted by a plurality of physical machines, when the itinerary provides for the switch from a first physical machine to a second physical machine, there is provision for:
- releasing an intrusion detection control point hosted by the first physical machine;
- activating an intrusion detection control point in the form of a virtual machine hosted by the second physical machine.

3. Method according to Claim 1, in which, when the itinerary provides for the switch from a first virtual machine to a second virtual machine, the first and second virtual machines being hosted by the same physical machine, there is provision for using one and the same intrusion detection control point on both virtual machines.

4. Method according to Claim 1, comprising a prior step of receiving, via an intrusion detection control device originating from a tool for evaluating vulnerabilities, a vulnerability indicator associated with the virtual resource.

5. Method according to the preceding claim, in which the step of evaluating the level of criticality of a first virtual resource is carried out by aggregating the vulnerability indicator received for the first resource with at least one vulnerability indicator of a second virtual resource, the second virtual resource being related to the first virtual resource.

6. Method according to Claim 4, in which the vulnerability indicator associated with a virtual machine is received according to a predefined frequency.

7. Method according to one of the preceding claims, in which the virtual resource of the itinerary having the highest associated criticality level appears in the itinerary a number of times that is smaller than a predetermined value.

8. Device (CC_IDS) for controlling the detection of intrusions on a set of virtual resources in a computer system comprising at least one physical machine hosting said set of virtual resources, comprising:
- itinerary calculation means (304), arranged to calculate an intrusion detection itinerary defined by a sequence of virtual resources to be monitored from the virtual resources of said set, which resources are added to and ordered within the sequence on the basis of respective vulnerability criticality levels assigned to the virtual resources of said set;
- means for calculating a vulnerability criticality level of a virtual resource by aggregating a vulnerability indicator of said virtual resource, obtained by correlating information arising from a passive discovery of the machine hosting said virtual resource with a vulnerability database, with various indicators, among which the vulnerability indicator of other virtual resources that are related to said virtual resource, a quality-of-service level associated with said virtual resource, any indicator making it possible to intervene in the definition of the criticality of the vulnerability associated with said virtual resource,
in which, when the sequence comprises two resources of respective vulnerability criticality levels n1 and n2, where n1 > n2, the resource of criticality level n1 appears in the itinerary a greater number of times than the resource of level n2,
- execution means (305), arranged to carry out an intrusion detection operation, following the calculated itinerary.

9. System for detecting intrusions on a set of virtual resources in a computer system comprising at least one physical machine hosting said set of virtual resources, comprising:
- an intrusion detection control device according to Claim 8;
- an intrusion detection control point, capable of implementing an operation of detecting intrusions on a virtual resource, on demand by the intrusion detection control device.

10. Program on a data storage medium and able to be loaded into the memory of a computer, the program comprising code portions for executing the steps of the method according to one of Claims 1 to 7, when the program is executed on said computer.

11. Data storage medium on which the computer program according to Claim 10 is recorded.
